# EUROPEAN PATENT SPECIFICATION

(11) **EP 1 431 591 B1**
(45) Date of publication and mention of the grant of the patent: **10.09.2008**
(21) Application number: 03293213.9
(22) Date of filing: 18.12.2003
(51) Int. Cl.: F16B 25/00, F16B 25/10, F16B 33/02

(54) **Threaded fastener with a primary and a dual secondary threads**
Schraube mit primärem und doppel-sekundärem Gewinde
Vis avec filet primaire et filet secondaire double

(30) Priority: 18.12.2002 US 323265; 06.01.2003 US 438228 P; 15.04.2003 US 413751
(43) Date of publication of application: 23.06.2004
(73) Proprietor: ILLINOIS TOOL WORKS INC., Glenview, Cook County, Illinois 60025 (US)
(72) Inventor: LeVey, Kenneth R., West Chicago, Illinois 60185 (US)
(74) Representative: Bloch, Gérard

(56) References cited:
- EP-A- 0 494 651
- EP-A- 1 167 781
- DE-A- 2 603 217
- GB-A- 2 325 288
- US-A- 4 040 328

## Description

### FIELD OF THE INVENTION

The present invention relates generally to threaded fasteners, and more particularly to a new and improved threaded fastener which has dual reinforcing lead structure integrally incorporated thereon for facilitating and simplifying the manufacture of the threaded fastener, and an improved entry or lead end portion for facilitating the insertion of the fastener into underlying substrates.whereby enhanced depth penetration of the threaded fastener into the underlying substrate or workpiece can be achieved. More particularly, the invention relates to the method of forming such threaded fasteneners.

### BACKGROUND OF THE INVENTION

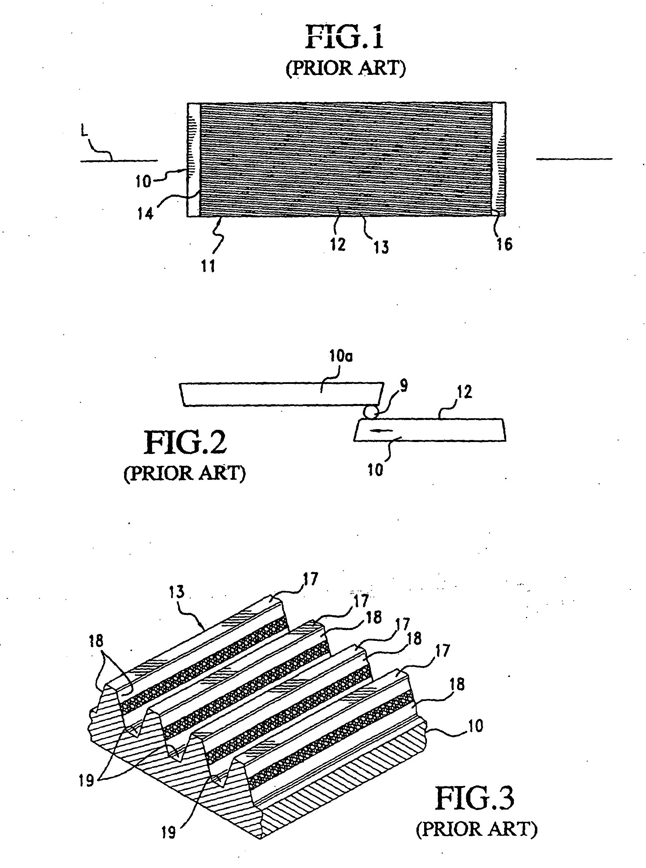

One method or technique for conventionally forming threaded fasteners comprises the rolling of a blank member between a pair of thread rolling dies as is disclosed, for example, within United States Patent 4,716,751 which issued to Wozniak on January 5, 1988. In accordance with such a conventional manufacturing method or technique for forming threaded fasteners, as illustrated, for example, within **FIGURES 1-3**, which correspond to **FIGURES 1, 1a,** and **2** of the aforenoted patent, a blank member 9 is adapted to be interposed between a pair of thread rolling dies 10,10a wherein, for example, a first one of the thread rolling dies 10 comprises a moving die while the second one of the thread rolling dies 10a comprises a stationary die. Each one of the thread rolling dies 10,10a comprises a tool steel body 11 having a working face 12, and, as best seen in **FIGURES 1** and **3**, and as described in connection with the thread rolling die 10, the working face 12 is provided with a plurality of die threads 13 which extend from a start end 14 of the thread rolling die 10 toward a finish end 16 of the thread rolling die 10, and which are disposed at a predetermined angle with respect to the axial or longitudinal extent or axis L of the thread rolling die 10 in order to in fact form the threads upon the blank member 9. As the blank member 9 is rolled between the two thread rolling dies 10,10a from ultimately form the root portions of the threads upon the blank member 9, and a plurality of root portions 19 which are adapted to ultimately form the crest portions of the threads upon the blank member 9 at the completion of the thread rolling operation. Lastly, flank portions 18 of the thread rolling die threads 13 define surfaces along which the blank member material flows during the formation of the crest and root portions of the threads upon the blank member 9, and the flank portions 18 of the thread rolling die threads 13 likewise form corresponding thread flank portions upon the blank member 9. It is further noted that as the rolling process proceeds, the material comprising the blank member continues to be displaced along the flank portions 18 of the thread rolling die threads 13 with the depth of penetration increasing as the rolling process continues until a fully formed thread is produced upon the blank member 9 at the finish ends 16 of the thread rolling dies 10,10a.

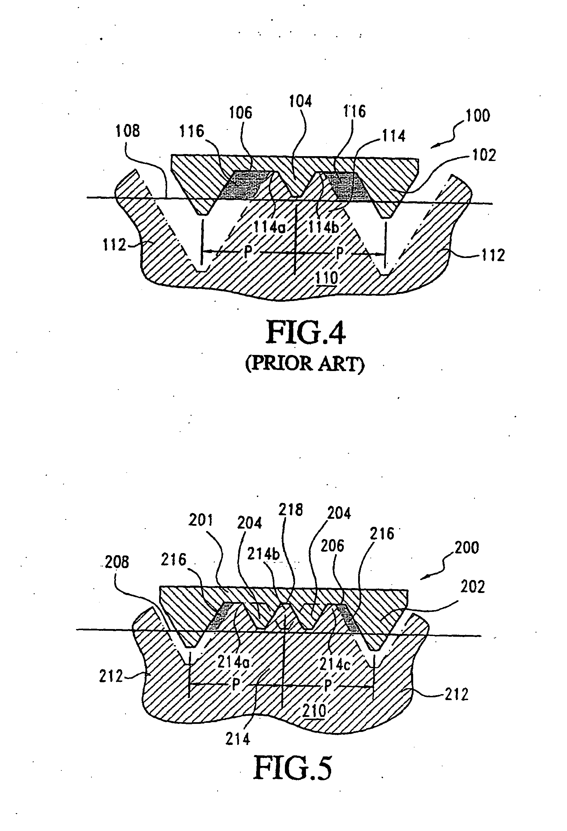

With reference now being made to **FIGURE 4**, there is disclosed a conventional threaded fastener 100 which is known in the industry as a "hi-low" thread form in view of the fact that the same comprises two different thread leads, that is, a first, primary thread lead 102, and a second, auxiliary thread lead 104 which provides reinforcement characteristics to the threaded fastener 100. The primary and auxiliary thread leads 102,104 are disposed upon the threaded fastener 100 in such a manner that successive portions of the auxiliary thread lead 104 are interposed between successive portions of the primary thread lead 102 along the axial extent of the threaded fastener 100, and it is particularly noted that the axial distance or pitch, as defined between each set of primary and auxiliary thread leads 102, 104, is denoted by P, while the axial distance or pitch, as defined between, for example, successive primary or successive auxiliary thread leads 102,102 or 104,104, is 2P. The root portion of the threaded fastener 100 is disclosed at 106, and it is noted that the crest height of the first, primary thread lead 102, as measured from the root portion 106 of the threaded fastener 100, is adapted to be at least twice the crest height of the second, auxiliary thread lead 104 as similarly measured from the root portion 106 of the threaded fastener 100. One of a pair of thread rolling dies, for forming the primary and auxiliary thread leads 102,104 upon a fastener blank member 108 in a manner similar to the aforenoted use of thread rolling dies 10,10a in connection with the formation of the threads upon the fastener blank member 9, is disclosed at 110, and it is seen that in order to ultimately form the primary and auxiliary thread leads 102,104 upon the fastener blank member 108, the thread rolling die 110 comprises a plurality of primary thread rolling die threads 112, and a plurality of auxiliary thread rolling die threads 114. In a manner corresponding to the alternative disposition of the first, primary thread leads 102 and the second, auxiliary thread leads 104 upon the threaded fastener 100, the plurality of primary thread rolling die threads 112 and the plurality of auxiliary thread rolling die threads 114 are similarly disposed in an alternative manner upon the thread rolling die 110.

More particularly, in connection with each one of the thread rolling die threads 114, it is seen that the crest portion of each auxiliary thread rolling die thread 114 actually comprises a pair of crest portions 114a,114b, wherein each one of the crest portions 114a,114b of each auxiliary thread rolling die thread has a lateral or transverse extent of between 0,077 - 0, 256 mm, and wherein further, the crest portions 114a, 114b are laterally or transversely spaced from each other by means of a predetermined distance so as to in fact form each one of the second, auxiliary thread leads 104 therebetween during the thread rolling process. In particular, recalling the fact that the depth of penetration of the thread rolling dies increases as the thread rolling process continues, and appreciating the additional fact that each one of the thread rolling die threads 112,114 is disposed at a predetermined angle with respect to the longitudinal or axial extent or axis of the thread rolling die 110, then it can be appreciated further that in order to fully form the first primary thread lead 102 upon the threaded fastener 100, after the second, auxiliary thread lead 104 has been formed so as to have a predermined depth, a predetermined amount of blank member material 116 must be displaced or moved a predetermined lateral or transverse distance during the thread rolling operation.

It is also conventionally known, however, that, in accordance with thread rolling manufacturing techniques, and the practical limitations inherently associated therewith, a predetermined amount of blank member material can only be displaced a predetermined distance during each rotation or revolution of the blank member along the pair of cooperating thread rolling dies in order to in fact achieve good, reliable, straight threads upon the blank member. Consequently, the greater the distance that the blank member material must be displaced, the greater the number of rotations or revolutions that the blank member must undergo during the thread rolling process until the thread leads are fully formed upon the original blank member. Accordingly, if the blank member must undergo a substantially large number of rotations or revolutions, then the longitudinal or axial length of each thread rolling die must be substantially large which, in turn, requires the use of a substantially large thread rolling machine which renders the manufacture of the threaded fasteners relatively costly. Since the practical problem in connection with the formation of, for example, the first, primary thread lead 102 upon the fastener blank member 108 resides in, or is a function of, the pitch spacing 2P between successive threads of the first, primary thread lead 102, and therefore the distance through which the blank material must be moved or displaced during the thread rolling process in order to form the successive threads of the first, primary thread lead 102, then one solution to this problem might be to shorten the pitch spacing between successive threads of the first, primary thread lead 102. The shortening of the pitch spacing between successive threads of the first, primary thread lead 102 would, however, increase the number of threads per inch that would be present upon the threaded fastener 100. This alteration in the number of threads per inch, as present upon the threaded fastener 100, however, adversely alters the operational characteristics of the threaded fastener 100, such as, for example, the amount of insertion torque required in connection with the driving of the threaded fastener into a substrate, the amount of time it takes to insert or drive the threaded fastener 100 into the substrate, the pull-out resistance of the threaded fastener 100 with respect to the substrate, and the like.

A need therefore existed in the art for a new and improved threaded fastener whereby the manufacturing process could be readily facilitated in view of the fact that, during the formation of the predetermined number of threads per inch comprising the thread leads of the threaded fastener in accordance with the thread rolling process, the blank member material only needed to effectively be displaced or moved through a smaller lateral or transverse distance in order to complete the formation of the thread leads upon the blank member such that, in turn, the longitudinal or axial length of the thread rolling dies could be substantially shortened so as to, in turn, require the use of a substantially shortened thread rolling machine which rendered the manufacture of the threaded fasteners more cost effective.

It has been further experienced that the insertion torque required to drive and fully insert dual reinforcing lead threaded fasteners into an underlying substrate or workpiece is relatively high in view of the fact that the provision or presence of the second, auxiliary, dual reinforcing leads upon the shank portion of the fastener, whereby successive threads of the second, auxiliary dual reinforcing leads are interposed between successive threads of the first, primary lead of the threaded fastener, accordingly results in the forward ones of the thread of the second, auxiliary dual reinforcing leads interfering somewhat with the flow or discharge of chips or debris of the underlying workpiece or substrate which are generated during the self-tapping of the threaded fastener within the pre-drilled bore of the underlying workpiece or substrate as the threaded fastener is driven and inserted into the underlying workpiece or substrate. Consequently, still further, the fasteners are often not able to be fully driven and inserted into the underlying substrate or workpiece to their desired depths of penetration. More particularly, if the insertion torque normally required to rotationally drive and axially insert the threaded fasteners into the underlying substrate or workpiece exceeds or becomes greater than the torsional strength characteristics of the material from which the threaded fasteners are fabricated, then during the fastener driving and insertion operation with respect to the underlying substrate or workpiece, the head end portion of the threaded fastener will suffer or experience fracture whereby such head end portion of the fastener will separate from that portion of the threaded shank of the fastener which has already been driven and inserted into the underlying substrate or workpiece. Accordingly, the threaded fastener can no longer be rotated and obviously cannot be driven or inserted further into the underlying substrate to the desired or required depth so as to in fact achieve the desired or required degree of penetration within the underlying substrate or workpiece.

A need therefore exists in the art for a new and improved dual reinforcing lead threaded fastener wherein the driving or insertion torque required to rotate the threaded fastener in connection with the rotational driving and axial insertion of the same into an underlying substrate is sufficiently effectively reduced so as not to exceed the torsional strength characteristics of the material from which the threaded fastener is fabricated whereby the threaded fastener will be permitted to be inserted within the underlying substrate to its fully required or desired penetration depth without experiencing any fracture or separation of the driven head portion of the threaded fastener.

### OBJECTS OP THE INVENTION

EP-A-0494651 teaches a method of forming a threaded fastener according to the preamble portion of the claim.

However, the auxiliary thread of this reference serves the purpose to increasing the friction of the fastener.

The object of the invention is to reduce the insertion torque of the fastener and increase the structural strenght of the fastener.

It is also an object of the present invention to minimize material displacement and its effect on the size of the tools for forming the threaded fastener. Accordingly, the method of the instant invention is characterized by the features of the characterizing portion of the claim.

It should also be mentioned that EP 1 167 781 disclosed a threaded fastener with a first and second threadings, but without describing any method for forming it.

### BRIEF DESCRIPTION OF THE DRAWINGS

Various other objects, features, and attendant advantages of the present invention will be more fully appreciated from the following detailed description when considered in connection with the accompanying drawings in which like reference characters designate like or corresponding parts throughout the several views, and wherein:
**FIGURE 1** is a top plan view of a conventional PRI**OR ART** thread rolling die;
**FIGURE 2** is a side elevational view of a pair of conventional **PRIOR ART** thread rolling dies, of the type illustrated within **FIGURE 1**, showing the use of the same in performing a thread rolling process in conjunction with a blank member interposed between the pair of conventional **PRIOR ART** thread rolling dies;
**FIGURE 3** is a perspective view, partly in cross-section, of the conventional **PRIOR ART** thread rolling die illustrated within **FIGURE 1****;**
**FIGURE 4** is a schematic view showing one of a pair of conventional **PRIOR ART** thread rolling dies which is utilized for forming a conventional "hi-low" thread form upon a blank member, wherein the "hi-low" thread comprises a first, primary thread lead and a second, auxiliary thread lead, and wherein further, successive threads of the first, primary and second, auxiliary thread leads are formed at alternative axial positions along the blank member;
**FIGURE 5** is a schematic view, similar to that of **FIGURE 4**, showing, however, one of a pair of new and improved thread rolling dies, constructed in accordance with the principles and teachings of the invention, which is utilized for forming a "hi-low" thread form upon a blank member, wherein the "hi-low" thread comprises a first, primary thread lead and a pair of second, auxiliary thread leads, and wherein further, successive threads of the first, primary and second, auxiliary thread leads are formed at alternative axial positions along the blank member; and
**FIGURE 6** is a side view of the new and improved dual reinforcing lead threaded fastener, constructed in accordance with the principles and teachings of the present invention.

### DETAILED DESCRIPTION OF THE PREFERRED EMBODIMENT

Referring again to the drawings, and more particularly and firstly to **FIGURE 5** thereof, there is disclosed a threaded fastener which has been developed in accordance with the principles and teachings of the invention and which is generally indicated by the reference character 200. It is to be appreciated that in view of the fact that the threaded fastener 200, as well as the thread rolling dies 210 utilized in connection with the formation of the threaded fastener 200, are similar to the conventional threaded fastener 100 and the thread rolling dies 110 utilized in connection with the formation of the conventional threaded fastener 100, except as will be more specifically noted hereinafter, the threaded fastener 200, the thread rolling dies 210, and the various components of such structures will be denoted by reference characters which correspond to the reference characters used in connection with the description of the conventional threaded fastener 100 and the thread rolling dies 110 used in connection with the fabrication of the same, however, the reference characters used in connection with the description of the threaded fastener 200, as well as in connection with the description of the thread rolling dies 210 used in connection with the fabrication of the threaded fastener 200, will be within the 200 series.

As was the case with the conventional threaded fastener 100, the threaded fastener 200 is of the type which is known in the industry as a "hi-low" thread form in view of the fact that the same substantially comprises a shank portion 201 upon which two different thread leads, that is, a first, primary thread lead 202, and a second, auxiliary thread lead 204 which provides reinforcement characteristics to the threaded fastener 200. It is noted, however, that in lieu of the provision of a single second, auxiliary thread lead upon the threaded fastener 200, as was the case with the conventional threaded fastener 100, there is provided a pair of axially spaced second, auxiliary thread leads 204.

More particularly, it is seen that the primary and dual auxiliary thread leads 202,204 are disposed upon the threaded fastener 200 in such a manner that successive portions or threads of the pair of auxiliary thread leads 204 are interposed between successive portions or threads of the primary thread lead 202 along the axial extent of the threaded fastener 200. In particular, it is especially noted that the axial distance or pitch, as defined between each set of primary and auxiliary thread leads 202,204, is the same as the axial distance or pitch, as defined between each set of primary and auxiliary thread leads 102,104 which was characteristic of the conventional threaded fastener 100, and is accordingly denoted by the reference character P, while the axial distance or pitch, as defined between, for example, successive primary thread leads 202,202, or between, for example, successive sets of the auxiliary thread leads 204,204, is the same as the axial distance or pitch, as defined between, for example, successive primary thread leads 102,102, or between, for example, successive auxiliary thread leads 104,104 which was characteristic of the conventional threaded fastener 100 and is accordingly denoted by the reference character 2P. The root portion of the threaded fastener 200 is disclosed at 206, and it is noted that, as was the case with the conventional threaded fastener 100, the crest height of the first, primary thread lead 202, as measured from the root portion 206 of the threaded fastener 200, is adapted to be at least twice the crest height of the pair of second, auxiliary thread leads 204 as similarly measured from the root portion 206 of the threaded fastener 200.

One of a pair of thread rolling dies, for forming the primary and auxiliary leads 202,204 upon a fastener blank member 208, in a manner similar to the aforenoted use of the thread rolling dies 10,10a,110 in connection with the formation of the threads upon the fastener blank members 9, 108, is disclosed at 210, and it is seen that in order to ultimately form the primary and auxiliary thread leads 202, 204 upon the fastener blank member 208, the thread rolling die 210 comprises a plurality of primary thread rolling die threads 212, and a plurality of auxiliary thread rolling die threads 214. In particular, in a manner corresponding to the alternative disposition of the first, primary thread leads 202 and the set of second, auxiliary thread leads 204 upon the threaded fastener 200, the plurality of primary thread rolling die threads 212 and the plurality of auxiliary thread rolling die threads 214 are alternatively disposed upon the thread rolling die 210. More particularly, in connection with each one of the auxiliary thread rolling die threads 214 for forming the set or pair of second, auxiliary thread leads 204 upon the blank member 208 in conjunction with the ultimate formation of the threaded fastener 200, it is seen that the crest portion of each auxiliary thread rolling die thread 214 actually comprises three crest portions 214a,214b,214c. As was the case with each one of the crest portions 114a,114b of the conventional thread rolling die 110, each one of the crest portions 214a, 214b, 214c has a lateral or transverse extent of between 0,077 - 0,256 mm,and in addition, the crest portions 214a, 214b, 214c are laterally or transversely spaced from each other by means of a predetermined distance so as to in fact form each one of the pair of second, auxiliary thread leads 204,204 therebetween during the thread rolling process.

The significance of providing each one of the auxiliary thread rolling die threads 214, so as to effectively comprise three, laterally or transversely spaced crest portions 214a, 214b, 214c for thereby forming the dual set or pair of second, auxiliary thread leads 204,204 upon the blank member 208, which is ultimately used to form the new and improved threaded fastener 200, will now be addressed. In particular, it has been noted that the depth of penetration of the thread rolling dies increases as the thread rolling process continues in order to ultimately form, or complete the formation of the first, primary thread lead upon the blank member, once the formation of, for example, the second, auxiliary thread lead has been formed so as to have a predetermined depth or crest height dimension. It is additionally noted that, as was the case with each one of the thread rolling die threads 112,114, each one of the thread rolling dies threads 212,214 is disposed at a predetermined angle with respect to the longitudinal or axial extent or axis of the thread rolling die 210. Consequently, it can be appreciated further that in order to fully form the first, primary thread lead 202 upon the blank member 208 which will ultimately serve as the threaded fastener 200, a predetermined amount of blank member material 216 must be moved or displaced a predetermined lateral or transverse distance. It is to be additionally recalled that, as is conventionally known in accordance with thread rolling manufacturing techniques and the practical limitations inherently associated therewith, a predetermined amount of blank member material can only be displaced a predetermined distance during each rotation or revolution of the blank member along the pair of cooperating thread rolling dies in order to in fact achieve good, reliable, straight threads upon the blank member.

Accordingly, it has also been heretofore noted that the greater the distance that the blank member material must be moved or displaced during, for example, the complete formation of the primary thread lead upon the blank member, the greater the number of rotations or revolutions that the blank member must undergo during the thread rolling process until the primary thread lead is fully formed upon the original blank member. Still further, if the blank member must undergo a substantially large number of rotations or revolutions during the thread rolling process, then the longitudinal or axial length of each thread rolling die must be substantially large which, in turn, requires the use of a substantially large thread rolling machine which renders the manufacture of the threaded fasteners relatively costly. It has also been noted that since the practical problem in connection with the formation of, for example, the first, primary thread lead 202 upon the fastener blank member 208 resides in the fact that the pitch spacing defined between successive threads of the first, primary thread lead 202 is 2P, and that the distance through which the material of the blank member must therefore be moved or displaced during the thread rolling process is a function of such pitch spacing 2P, then the solution to this problem would seem to be to effectively reduce or shorten the distance, defined between the successive threads of the first, primary thread lead 202, through which the material of the blank member 208 needs to be displaced or moved in conjunction with the complete formation of the first, primary thread lead 202 and the successive threads thereof during the thread rolling process. The shortening of the actual pitch spacing 2P between successive threads of the first, primary thread lead 202 has been noted, however, as not being a viable solution to the aforenoted problem in view of the fact that such would increase the number of threads per inch of the threaded fastener 200 which would, in turn, adversely alter the operational characteristics of the threaded fastener 200.

However, as a result of the provision of the dual set or pair of second, auxiliary thread leads 204,204, which are axially spaced apart through means of a predetermined distance or space 218 of, for example, 0,077 - 0,256 mm, within the same space defined between successive threads of the first, primary thread lead 202, that is, within the same distance or lineal pitch dimension 2P, the effective distances 216,216, through which the material of the blank member 208 must be correspondingly moved or displaced in connection with the formation of the successive threads of the first, primary thread lead 202, are able to be substantially or significantly reduced. Since such distances 216, 216, through which the material of the blank member 208 must be correspondingly moved or displaced in connection with the formation of the successive threads of the first, primary thread lead 202, are able to be substantially or significantly reduced the number of rotations or revolutions that the blank member 208 must undergo during the entire thread rolling process in order to in fact achieve the complete formation of the first, primary thread lead 202, is able to be proportionally reduced. Accordingly, the longitudinal or axial length of each thread rolling die can be proportionally reduced or shortened whereby, in turn, the use of a substantially reduced or smaller thread rolling machine is able to be correspondingly employed which renders the manufacture of the threaded fasteners 200 more cost effective. In addition, the provision of the dual set or pair of second, auxiliary thread leads 204,204 upon the threaded fastener 200 increases the axial reinforcement characteristics imparted to the threaded fastener 200 over the axial extent thereof.

While the aforenoted structure of the thread rolling dies has facilitated the fastener manufacturing process whereby relatively shortened thread rolling dies and thread rolling machines can be employed in a more cost-effective manner, it has been experienced that the insertion torque required to drive and fully insert such dual reinforcing lead threaded fasteners into an underlying substrate is relatively high. It has been determined that the provision or presence of the second, auxiliary, dual reinforcing leads upon the shank portion of the fastener, wherein successive threads of the second, auxiliary dual reinforcing leads are interposed between successive threads of the first, primary lead of the threaded fastener, results in forward ones of the threads of the second, auxiliary dual reinforcing leads interfering somewhat with the flow or discharge of chips or debris of the underlying workpiece or substrate which is generated during the self-tapping of the threaded fastener within the pre-drilled bore of the underlying workpiece or substrate as the threaded fastener is driven and inserted into the underlying work-piece or substrate.

Accordingly, still further, the fasteners are often not able to be fully driven and inserted into the underlying substrate or workpiece to their desired depths of penetration. More particularly, if the insertion torque normally required to rotationally drive and axially insert the threaded fasteners into the underlying substrate or workpiece exceeds or becomes greater than the torsional strength characteristics of the material from which the threaded fasteners are fabricated, then during the fastener driving and insertion operation with respect to the underlying substrate or workpiece, the head end portion of the threaded fastener will suffer or experience fracture whereby such head end portion of the fastener will separate from that portion of the threaded shank of the fastener which has already been driven and inserted into the underlying substrate or workpiece. Consequently, the threaded fastener can no longer be rotated and obviously cannot be driven or inserted further into the underlying substrate or workpiece to the desired or required depth so as to in fact achieve the desired or required degree of penetration within the underlying workpiece or substrate.

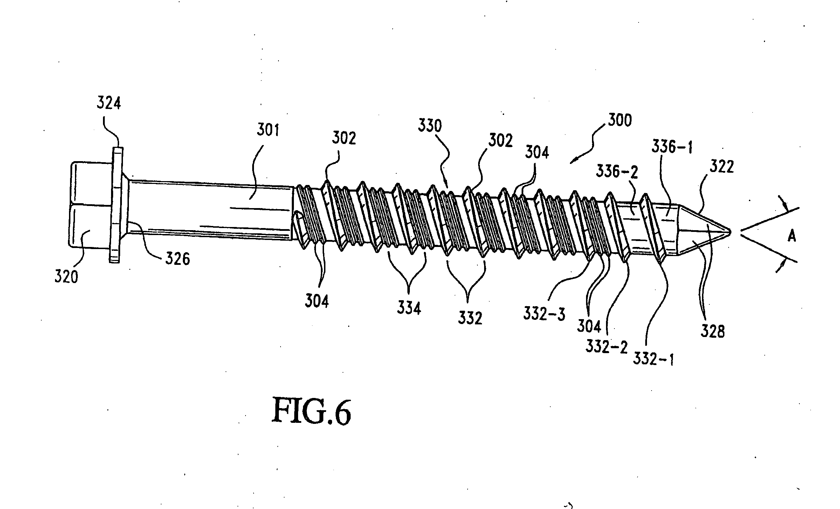

Accordingly then, with particular reference now being made to **FIGURE 6**, a new and improved dual-reinforcing lead threaded fastener, constructed in accordance with the principles and teachings of the present invention, is disclosed and is generally indicated by the reference character 300. In view of the fact that the new and improved dual-reinforcing lead threaded fastener 300 is quite similar to the dual-reinforcing lead threaded fastener 200 as disclosed, for example, within **FIGURE 5**, a detailed description of the new and improved dual-reinforcing lead threaded fastener 300 will not be included herewith for brevity purposes, however, the detailed description will in effect concentrate upon the structural differences comprising the dual-reinforcing lead threaded fastener 200 and the new and improved dual-reinforcing lead threaded fastener 300. It is also to be noted that in view of the structural similarities which exist between the dual-reinforcing lead threaded fastener 200 and the new and improved dual-reinforcing lead threaded fastener 300, structural components of the new and improved dual-reinforcing lead threaded fastener 300 which correspond to the structural components of the dual-reinforcing lead threaded fastener 200 will be designated by corresponding reference characters except that the reference characters will be within the 300 series. More particularly, then, it is seen that the new and improved dual-reinforcing lead threaded fastener 300 comprises a shank portion 301, a hexagonally shaped head portion 320 integrally formed upon a first end portion of the shank portion 301, and a pointed tip portion 322 integrally formed upon a second opposite end portion of the shank portion 301. The head portion 320 is integrally connected to the shank portion 301 by means of a flanged portion 324 and a tapered or chamfered neck portion 326, and the pointed tip portion 322 has the configuration of a pyramid comprising a plurality of facets 328 and an included angle A, as defined between diametrically opposite sides of the tip portion 322, which is within the range of 43-47°.

The shank portion 301 of the threaded fastener 300 is provided with a threaded section 330 which, in accordance with the teachings and principles as previously set forth and described in conjunction with the formation of the threaded fastener 200 as disclosed within **FIGURE 5**, comprises a first, primary thread lead 302 and a pair of second, auxiliary thread leads 304,304. The single primary and dual auxiliary thread leads 302,304,304 are substantially identical to the single primary and dual auxiliary thread leads 202,204,204 of the threaded fastener 200 as disclosed within **FIGURE 5** in that the first, primary thread lead 302 comprises a plurality of successive, axially spaced primary threads 332, while each one of the second, auxiliary thread leads 304,304 comprises a plurality of successive, axially spaced auxiliary threads 334,334, and accordingly, a detailed description of the same will be omitted herefrom in the interest of brevity. It is noted, however, as disclosed within **FIGURE 6**, that the threaded section 330 of the threaded fastener 300 can have a predetermined axial extent, which may in fact be varied depending upon various factors or parameters, such as, for example, the particular workpiece or substrate into which the threaded fastener 300 is to be driven and inserted, the desired torque insertion and pull-out resistance values, and the like, however, as disclosed within **FIGURE 6**, for example, the axial extent of the threaded section 330 of the threaded fastener 300 can in fact comprise approximately at least one-half to two-thirds of the axial length of the threaded fastener 300.

In order to clearly appreciate the unique and novel teachings and principles of the present invention, the forwardmost primary threads have been designated as 332-1, 332-2, and 332-3 with the first primary thread 332-1 being axially located immediately upstream of the pointed tip portion 322 of the threaded fastener 300, while the second and third primary threads 332-2,332-3 being axially located upstream of the first primary thread 332-1 and respectively axially separated from each other through means of an axial distance or pitch of 2P in accordance with the teachings and principles as noted in connection with the structure set forth and described in connection with **FIGURE 5**. Recalling that the insertion torque required to drive and fully insert a fastener, such as that illustrated within **FIGURE 5**, into an underlying substrate or workpiece has been experienced as being relatively high in view of the fact that forward ones of the threads of the second, auxiliary dual reinforcing leads 204,204 have apparently interfered somewhat with the flow or discharge of chips or debris of the underlying workpiece or substrate which is generated during the self-tapping of the threaded fastener 200 within the pre-drilled bore of the underlying workpiece or substrate as the threaded fastener 200 is driven and inserted into the underlying workpiece or substrate, it is seen that in accordance with the principles and teachings of the present invention, the forwardmost ones of the auxiliary threads 334 of the second, auxiliary thread leads 304, 304 have been removed from the forward end of the threaded section 330 of the threaded fastener 300.

More particularly, the axial section of the shank portion 301 of the threaded fastener 300, which is defined between the tip portion 322 of the threaded fastener 300 and the first primary thread 332-1, is totally devoid of any of the auxiliary threads 334 of the second, auxiliary thread leads 304,304 so as to effectively define a first peripherally or circumferentially extending space, recess, or pocket 336-1 within which chips or debris of the underlying workpiece or substrate, into which the threaded fastener 300 is being driven and inserted, can be temporarily accommodated or accumulated as the pointed tip portion 322 of the threaded fastener 300, as well as the first primary thread 332-1 of the threaded fastener 300, begin to enter the workpiece or substrate and thereby start generating or forming such chips or debris. In a similar manner, the axial section of the shank portion 301 of the threaded fastener 300, which is defined between the first primary thread 332-1 and the second primary thread 332-2, is likewise totally devoid of any of the auxiliary threads 334 of the second, auxiliary thread leads 304,304 so as to effectively define a second peripherally or circumferentially extending space, recess, or pocket 336-2 within which chips or debris of the underlying workpiece or substrate, into which the threaded fastener 300 is being driven and inserted, can likewise be temporarily accommodated or accumulated. It can be readily appreciated that such debris or chips will subsequently fall into the bottom depths of the bore pre-drilled within the underlying workpiece or substrate and that the provision of the recesses or pockets 336-1,336-2 effectively provide for the accommodation of such debris or chips until such debris or chips do in fact fall down into the bottom region of the pre-drilled bore. As a result of such an accommodation of the debris or chips within the recesses or pockets 336-1,336-2, such debris or chips do not interfere with or adversely hinder the self-tapping advancement of the forwardmost ones of the primary threads 332-1,332-2 whereby insertion torque levels can be dramatically reduced. While it has been noted that the pockets or recesses 336-1,336-2 may be operatively provided in conjunction with the first and second primary threads 332-1,332-2, a similar pocket or recess may optionally be provided in conjunction with additional primary threads, such as, for example, between the second primary thread 332-2 and the third primary thread 332-3 as torque insertion levels may dictate or require.

Thus, it may be seen that in accordance with the principles and teachings of the present invention, there has been developed a new and improved threaded fastener wherein not only has the thread rolling process or technique for manufacturing the threaded fastener been substantially facilitated, but in addition, torque insertion levels have been dramatically reduced due to the elimination of any interference between debris or chips and the threaded fastener during the fastener driving and insertion procedure. In addition, as a result of the aforenoted reduction in the torque insertion levels, the threaded fasteners will not experience premature rupture or failure whereby the threaded fasteners will be capable of being driven and inserted into the underlying substrate or workpiece to the desired penetration depth.

Obviously, many variations and modifications of the present invention are possible in light of the above teachings. For example, while particular dimensions of the threaded fastener, the axial distances defined between successive threads, or the relative sizes of the thread leads, have been noted, such dimensions, distances, or sizes can of course be altered as may be desired in order to correspondingly alter the performance characteristics of the threaded fastener without departing from the principles and teachings of the present invention. It is therefore to be understood that within the scope of the appended claims, the present invention may be practiced otherwise than as specifically described herein.

## Claims

1. A method of forming a threaded fastener, comprising the steps of :
providing a pair of thread rolling dies (210) wherein each one of said pair of thread rolling dies comprises a body portion (11) having a longitudinal axis; a working face (212) disposed upon said body portion; a plurality of first, primary thread rolling die threads, disposed upon said working face (212) of said body portion (11) and oriented at a predetermined angle with respect to said longitudinal axis of said body portion (11), for forming a first, primary thread lead, comprising a plurality of first, primary threads (202), upon a blank member (208) during a thread rolling process, wherein said plurality of first, primary thread rolling die threads (202) are spaced from each other by means of first predetermined transversely spaced distances such that said first, primary threads (202) will be successively formed upon said blank member (208) at first predetermined positions which are spaced from each other by means of first predetermined axially spaced distances; and a plurality of sets of second, auxiliary thread rolling die threads (214), disposed upon said working face (212) of said body portion at positions transversely interposed between said plurality of first, primary thread rolling die threads and oriented at a predetermined angle with respect to said longitudinal axis of said body portion (11), for forming a dual set of second, auxiliary thread leads (204), each comprising a plurality of second, auxiliary threads, upon said blank member (208) during said thread rolling process,
positioning said pair of thread rolling dies (210) with respect to each other such that said working faces (212) of said pair of thread rolling dies (210, 210a) are oppositely disposed toward each other in a spaced apart mode;
interposing said blank member (208) between said oppositely disposed spaced apart working faces (212) of said pair of thread rolling dies (210); and
rolling said blank member (208) between said pair of spaced apart thread rolling dies (210),
**characterized in that** said plurality of second, auxiliary thread rolling die threads, comprising each one of said plurality of sets of second, auxiliary thread rolling die threads (214), are spaced from each other by means of second predetermined transversely spaced distances (218);
whereby,
as a result of said disposition of said plurality of sets of second, auxiliary thread rolling die threads (214), for forming said dual set of second, auxiliary threads (204), between said plurality of first, primary thread rolling die threads (202), when said plurality of first, primary threads (202) are successively being formed upon said blank member (208) at the first predetermined positions, the distances, through which material portions of said blank member (208) utilized for forming said plurality of first, primary threads (202) upon said blank member (208) need to be moved, are effectively minimized thereby, in turn, minimizing the length dimensions of said pair of thread rolling dies (210) required to completely form said threaded fastener from said blank member (208).

## Patentansprüche

1. Verfahren zum Ausbilden einer Schraube, folgende Schritte aufweisend:
Bereitstellen eines Paars Gewindewalzbacken (210), wobei jede des Paars Gewindewalzbacken einen Körperabschnitt (11) mit einer Längsachse, eine Arbeitsfläche (212), die auf dem Körperabschnitt angeordnet ist, mehrere erste, primäre Gewindewalzbackengewinde, die auf der Arbeitsfläche (212) des Körperabschnitts (11) angeordnet sind und in einem vorgegebenen Winkel bezüglich der Längsachse des Körperabschnitts (11) ausgerichtet sind, zum Ausbilden einer ersten, primären Gewindesteigung, die mehrere erste, primäre Gewinde (202) aufweist, auf einem unbearbeiteten Glied (208) während eines Gewindewalzvorgangs, wobei die mehreren ersten, primären Gewindewalzbackengewinde derart mittels erster, vorgegebener, quer beabstandeter Abstände voneinander beabstandet sind, dass die ersten, primären Gewinde (202) nacheinander auf dem unbearbeiteten Glied (208) an ersten vorgegebenen Positionen ausgebildet werden, die mittels erster, vorgegebener, axial beabstandeter Abstände voneinander beabstandet sind, und mehrere Sätze zweiter, sekundärer Gewindewalzbackengewinde (214) aufweist, die auf der Arbeitsfläche (212) des Körperabschnitts an Positionen angeordnet sind, welche quer zwischen den mehreren ersten, primären Gewindewalzbackengewinden angeordnet sind und in einem vorgegebenen Winkel bezüglich der Längsachse des Körperabschnitts (11) ausgerichtet sind, zum Ausbilden eines zweifachen Satzes zweiter, sekundärer Gewindesteigungen (204), die jede mehrere zweite, sekundäre Gewinde aufweisen, auf dem unbearbeiteten Glied (208) während des Gewindewalzvorgangs,
Positionieren des Paars Gewindewalzbacken (210) derart in Bezug zueinander, dass die Arbeitsflächen (212) des Paars Gewindewalzbacken (210, 210a) gegenüberliegend einander zugekehrt und voneinander beabstandet angeordnet sind,
Einschieben des unbearbeiteten Glieds (208) zwischen die gegenüberliegend angeordneten, voneinander beabstandeten Arbeitsflächen (212) des Paars Gewindewalzbacken (210), und
Walzen des unbearbeiteten Glieds (208) zwischen dem Paar voneinander beabstandeter Gewindewalzbacken (210),
**dadurch gekennzeichnet, dass** die mehreren zweiten, sekundären Gewindewalzbackengewinde, die jedes einen der mehreren Sätze zweiter, sekundärer Gewindewalzbackengewinde (214) aufweist, mittels zweiter, vorgegebener, quer beabstandeter Abstände (218) voneinander beabstandet sind,
wobei
infolge der Anordnung der mehreren Sätze zweiter, sekundärer Gewindewalzbackengewinde (214) zum Ausbilden des zweifachen Satzes zweiter, sekundärer Gewinde (204) zwischen den mehreren ersten, primären Gewindewalzbackengewinde, wenn die mehreren ersten, primären Gewinde (202) nacheinander auf dem unbearbeiteten Glied (208) an den ersten vorgegebenen Positionen ausgebildet werden, die Abstände, über die Materialabschnitte des unbearbeiteten Glieds (208), die zum Ausbilden der mehreren ersten, primären Gewinde (202) auf dem unbearbeiteten Glied (208) genutzt werden, verschoben werden müssen, wirksam minimiert sind, wodurch wiederum die Längenabmessungen des Paars Gewindewalzbacken (210), die zum vollständigen Ausbilden der Schraube aus dem unbearbeiteten Glied (208) erforderlich sind, minimiert sind.

## Revendications

1. Procédé de formation d'un élément d'assemblage fileté, comportant les étapes consistant à :
mettre en place une paire de matrices (210) de roulage de filets, chaque matrice de ladite paire de matrices de roulage de filets comportant une partie (11) de corps présentant un axe longitudinal ; une face (212) de travail disposée par-dessus ladite partie de corps ; une pluralité de premiers filets primaires de matrice de roulage de filets, disposés par-dessus ladite face (212) de travail de ladite partie (11) de corps et orientés suivant un angle prédéterminé par rapport audit axe longitudinal de ladite partie (11) de corps, afin de former un premier pas de vis primaire, comportant une pluralité de premiers filets primaires (202), sur un lopin brut (208) au cours d'un processus de roulage de filets, ladite pluralité de premiers filets primaires de matrice de roulage de filets étant espacés les uns par rapport aux autres par des premières distances prédéterminées espacées transversalement de telle sorte que lesdits premiers filets primaires (202) soient formés successivement sur ledit lopin brut (208) à des premières positions prédéterminées espacées les unes des autres par des premières distances prédéterminées espacées axialement ; et une pluralité d'ensembles de deuxièmes filets auxiliaires (214) de matrice de roulage de filets, disposés par-dessus ladite face (212) de travail de ladite partie (11) de corps à des positions interposées transversalement entre les filets de ladite pluralité de premiers filets primaires de matrice de roulage de filets et orientés suivant un angle prédéterminé par rapport audit axe longitudinal de ladite partie (11) de corps, afin de former un double ensemble de deuxièmes pas de vis auxiliaires (204), comportant chacun une pluralité de deuxièmes filets auxiliaires, sur ledit lopin brut (208) au cours dudit processus de roulage de filets,
positionner ladite paire de matrices (210) de roulage de filets l'une par rapport à l'autre de telle sorte que les faces (212) de travail de ladite paire de matrices (210) de roulage de filets soient disposées l'une en face de l'autre de façon espacée ;
interposer ledit lopin brut (208) entre lesdites faces (212) de travail disposées l'une en face de l'autre et espacées de ladite paire de matrices (210) de roulage de filets ; et
rouler ledit lopin brut (208) entre les matrices de ladite paire de matrices (210) de roulage de filets espacées,
**caractérisé en ce que** les filets de ladite pluralité de deuxièmes filets auxiliaires de matrice de roulage de filets, comportant chacun de ladite pluralité d'ensembles de deuxièmes filets auxiliaires (214) de matrice de roulage de filets, sont espacés les uns par rapport aux autres par des deuxièmes distances prédéterminées (218) espacées transversalement ;
en conséquence de quoi
du fait de ladite disposition de ladite pluralité d'ensembles de deuxièmes filets auxiliaires (214) de matrice de roulage de filets, destinés à former ledit double ensemble de deuxièmes pas de vis auxiliaires (204), entre ladite pluralité de premiers filets primaires de matrice de roulage de filets, lorsque les filets de ladite pluralité de premiers filets primaires (202) sont formés successivement sur ledit lopin brut (208) aux premières positions prédéterminées, les distances sur lesquelles doivent être déplacées les parties de matière dudit lopin brut (208) utilisées pour former ladite pluralité de premiers filets primaires (202) sur ledit lopin brut (208) sont minimisées, minimisant par voie de conséquence les dimensions en longueur de ladite paire de matrices (210) de roulage de filets nécessaires pour former entièrement ledit élément d'assemblage fileté à partir dudit lopin brut (208).
